(19)

**Europäisches Patentamt**
**European Patent Office**
**Office européen des brevets**

(11) **EP 4 651 094 A1**

(12) **EUROPEAN PATENT APPLICATION**

(43) Date of publication:
**19.11.2025 Bulletin 2025/47**

(21) Application number: **25175963.5**

(22) Date of filing: **13.05.2025**

(51) International Patent Classification (IPC):
**G06V 10/44** *(2022.01)*    **G06V 10/764** *(2022.01)*
**G06V 10/82** *(2022.01)*    **G06V 40/18** *(2022.01)*

(52) Cooperative Patent Classification (CPC):
**G06V 10/82; G06V 10/454; G06V 10/764;**
**G06V 40/197;** G06V 2201/03

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **17.05.2024 IN 202421039029**

(71) Applicant: **Tata Consultancy Services Limited**
**Maharashtra (IN)**

(72) Inventors:
• **BANGALORE SAMPATHKUMAR, Vivek**
  **560066 Bangalore, Karnataka (IN)**
• **GUBBI LAKSHMINARASIMHA, Jayavardhana**
  **Rama**
  **560066 Bangalore, Karnataka (IN)**
• **SINGH, Mohana**
  **560066 Bangalore, Karnataka (IN)**
• **PAL, Arpan**
  **700160 Kolkata, West Bengal (IN)**

(74) Representative: **Goddar, Heinz J.**
**Boehmert & Boehmert**
**Anwaltspartnerschaft mbB**
**Pettenkoferstrasse 22**
**80336 München (DE)**

(54) **PROTOTYPE-BASED TASK INDEPENDENT INTERPRETABLE MODEL**

(57) Interpretation of images has a variety of applications. For instance, medical image diagnostics such as glaucoma remains one of the leading causes of irreversible blindness, its timely detection being imperative to avoiding permanent visual impairment. Conventionally, the sole focus on increasing the accuracy of predictions has resulted in a lack of trust due to the black box nature of such models. Present disclosure provides systems and methods that implement a conditional generative model along with a classifier that enable learning of class-specific prototypes, which capture the general characteristics or concepts of the pathology, and then use the actual visualized prototypes in the decision-making process by computing the similarity between them and the query image, as a result revealing the underlying model's reasoning process.

receiving, via one or more hardware processors, an input image, and a set of prototype vectors — 202

generating, by using a decoder of the conditional generative model via the one or more hardware processors, a prototype image for each prototype vector amongst the set of prototype vectors to obtain a set of prototype images, wherein each prototype vector is associated with a class label — 204

extracting, by using a feature extractor comprised in a classifier via the one or more hardware processors, a set of image features from the input image and a set of prototype image features from each prototype image amongst the set of prototype images respectively — 206

processing, by using a similarity computation layer comprised in the classifier via the one or more hardware processors, each image feature, and each prototype image feature as a pair to obtain a set of similarity scores for one or more pairs, wherein each pair from the one or more pairs is associated with a similarity score amongst the set of similarity scores — 208

generating, by using a fully connected layer comprised in the classifier via the one or more hardware processors, an output class of the input image based on a weighted combination of the set of similarity scores, wherein the output class indicates a similarity between the set of prototype images and the input image for interpretation thereof — 210

**FIG. 3**

**EP 4 651 094 A1**

**Description**

CROSS-REFERENCE TO RELATED APPLICATIONS AND PRIORITY

The present application claims priority to Indian application no. 202421039029, filed on May 17, 2024.

TECHNICAL FIELD

The disclosure herein generally relates to deep learning models for interpretation, and, more particularly, to prototype-based task independent interpretable model.

BACKGROUND

Glaucoma remains one of the leading causes of irreversible blindness, its timely detection being imperative to avoiding permanent visual impairment. Deep learning methods offer a solution for early detection of Glaucoma by reducing the need for manual labor at screening stages. Hence, numerous automated methods have been proposed to assist experts in diagnosing Glaucoma from fundus images. However, the sole focus on increasing the accuracy of predictions has resulted in a lack of trust due to the black box nature of such models. Similar sentiment across multiple high-stakes decision domains has led to a growing demand for replacing black-box models with glass-box ones.

SUMMARY

Embodiments of the present disclosure present technological improvements as solutions to one or more of the above-mentioned technical problems recognized by the inventors in conventional systems.

For example, in one aspect, there is provided a processor implemented method for prototype-based task independent interpretable model. The method comprises receiving, via one or more hardware processors, an input image, and a set of prototype vectors; generating, by using a decoder of the conditional generative model via the one or more hardware processors, a prototype image for each prototype vector amongst the set of prototype vectors to obtain a set of prototype images, wherein each prototype vector is associated with a class label; extracting, by using a feature extractor comprised in a classifier via the one or more hardware processors, a set of image features from the input image and a set of prototype image features from each prototype image amongst the set of prototype images respectively; processing, by using a similarity computation layer comprised in the classifier via the one or more hardware processors, each image feature, and each prototype image feature as a pair to obtain a set of similarity scores for one or more pairs, wherein each pair from the one or more pairs is associated with a similarity score amongst the set of similarity scores; and generating, by using a fully connected layer comprised in the classifier via the one or more hardware processors, an output class of the input image based on a weighted combination of the set of similarity scores, wherein the output class indicates a similarity between the set of prototype images and the input image for interpretation thereof.

In an embodiment, the conditional generative model is trained by receiving, via an encoder of the conditional generative model, an image training dataset comprising a training image and an associated label, wherein the training image is a first representation type; generating, via the encoder of the conditional generative model, a set of vectors pertaining to a posterior distribution of the training image dataset based on the training image and the associated label; sampling the set of vectors based on the posterior distribution of the training image dataset to obtain a second representation type of the training image; and processing, via the decoder of the conditional generative model, the second representation type of the training image and the associated label to obtain a reconstructed image.

In an embodiment, a perceptual reconstruction loss, a distribution distance loss, and a discriminator loss associated with the conditional generative model are combined based on one or more predefined weights to obtain a training loss.

In an embodiment, one or more parameters of the conditional generative model are updated based on the training loss.

In an embodiment, the set of prototype vectors is obtained based on training of the feature extractor, the similarity computation layer, and the fully connected layer.

In an embodiment, a dimension of the prototype image of each prototype vector amongst the set of prototype vectors and the input image is identical.

In an embodiment, the similarity score is calculated to determine an importance of each prototype vector amongst the set of prototype vectors for classification of the image.

In an embodiment, a domain of the image and the training image is identical.

In another aspect, there is provided a processor implemented system for prototype-based task independent interpretable model. The system comprises: a memory storing instructions; one or more communication interfaces; and one or more hardware processors coupled to the memory via the one or more communication interfaces, wherein the one or more hardware processors are configured by the instructions to: receive an input image, and a set of prototype vectors; generate, by using a decoder of the conditional generative model, a prototype image for each prototype vector amongst the set of prototype vectors to obtain a set of prototype images, wherein each prototype vector is associated with a class label; extract, by using a feature extractor comprised in a classifier, a set of image features from the input image and a set of prototype image features from each prototype image amongst the set of prototype images respectively; process, by using a similarity computation layer comprised in the classifier, each image feature, and each prototype image feature as a pair to obtain a set of similarity scores for one or more pairs, wherein each pair from the one or more pairs is associated with a similarity score amongst the set of similarity scores; and generate, by using a fully connected layer comprised in the classifier, an output class of the input image based on a weighted combination of the set of similarity scores, wherein the output class indicates a similarity between the set of prototype images and the input image for interpretation thereof.

In an embodiment, the conditional generative model is trained by receiving, via an encoder of the conditional generative model, an image training dataset comprising a training image and an associated label, wherein the training image is a first representation type; generating, via the encoder of the conditional generative model, a set of vectors pertaining to a posterior distribution of the training image dataset based on the training image and the associated label; sampling the set of vectors based on the posterior distribution of the training image dataset to obtain a second representation type of the training image; and processing, via the decoder of the conditional generative model, the second representation type of the training image and the associated label to obtain a reconstructed image.

In an embodiment, a perceptual reconstruction loss, a distribution distance loss, and a discriminator loss associated with the conditional generative model are combined based on one or more predefined weights to obtain a training loss.

In an embodiment, one or more parameters of the conditional generative model are updated based on the training loss.

In an embodiment, the set of prototype vectors is obtained based on training of the feature extractor, the similarity computation layer, and the fully connected layer.

n an embodiment, a dimension of the prototype image of each prototype vector amongst the set of prototype vectors and the input image is identical.

In an embodiment, the similarity score is calculated to determine an importance of each prototype vector amongst the set of prototype vectors for classification of the image.

In an embodiment, a domain of the image and the training image is identical.

In yet another aspect, there are provided one or more non-transitory machine-readable information storage mediums comprising one or more instructions which when executed by one or more hardware processors causes prototype-based task independent interpretable model by receiving an input image, and a set of prototype vectors; generating, by using a decoder of the conditional generative model, a prototype image for each prototype vector amongst the set of prototype vectors to obtain a set of prototype images, wherein each prototype vector is associated with a class label; extracting, by using a feature extractor comprised in a classifier, a set of image features from the input image and a set of prototype image features from each prototype image amongst the set of prototype images respectively; processing, by using a similarity computation layer comprised in the classifier, each image feature, and each prototype image feature as a pair to obtain a set of similarity scores for one or more pairs, wherein each pair from the one or more pairs is associated with a similarity score amongst the set of similarity scores; and generating, by using a fully connected layer comprised in the classifier, an output class of the input image based on a weighted combination of the set of similarity scores, wherein the output class indicates a similarity between the set of prototype images and the input image for interpretation thereof.

In an embodiment, the conditional generative model is trained by receiving, via an encoder of the conditional generative model, an image training dataset comprising a training image and an associated label, wherein the training image is a first representation type; generating, via the encoder of the conditional generative model, a set of vectors pertaining to a posterior distribution of the training image dataset based on the training image and the associated label; sampling the set of vectors based on the posterior distribution of the training image dataset to obtain a second representation type of the training image; and processing, via the decoder of the conditional generative model, the second representation type of the training image and the associated label to obtain a reconstructed image.

In an embodiment, a perceptual reconstruction loss, a distribution distance loss, and a discriminator loss associated with the conditional generative model are combined based on one or more predefined weights to obtain a training loss.

In an embodiment, one or more parameters of the conditional generative model are updated based on the training loss.

In an embodiment, the set of prototype vectors is obtained based on training of the feature extractor, the similarity computation layer, and the fully connected layer.

In an embodiment, a dimension of the prototype image of each prototype vector amongst the set of prototype vectors and the input image is identical.

In an embodiment, the similarity score is calculated to determine an importance of each prototype vector amongst the set of prototype vectors for classification of the image.

In an embodiment, a domain of the image and the training image is identical.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 depicts an exemplary system for prototype-based task independent interpretable model, in accordance with an embodiment of the present disclosure.

FIG. 2A depicts an exemplary high level block diagram of the system illustrating training for a conditional generative model, in accordance with an embodiment of the present disclosure.

FIG. 2B depicts an exemplary high level block diagram of the system that is trained for prototype-based task independent interpretable model, in accordance with an embodiment of the present disclosure.

FIG. 3 depicts an exemplary flow chart illustrating a method for prototype-based task independent interpretable model, using the systems of FIG. 1-2B, in accordance with an embodiment of the present disclosure.

FIG. 4 shows the prototypes learned for each class, in accordance with an embodiment of the present disclosure.

FIG. 5 shows similarity scores obtained for a correctly classified test sample, in accordance with an embodiment of the present disclosure.

FIG. 6 depicts prototypes learned by a version of the method which uses the decoder of a generative model without any class conditioning, in accordance with an embodiment of the present disclosure.

FIG. 7 depicts visual comparison of prototypes learnt by ProtoVAE of conventional method and the method of the present disclosure using the same classification backbone, in accordance with an embodiment of the present disclosure.

FIG. 8 depicts a visual comparison of prototypes learned by the system for different classification backbones and latent dimension 64, in accordance with an embodiment of the present disclosure.

FIG. 9 depicts multiple prototypes per class learned by the system for a VGG16 classification backbone with latent dimension 16, in accordance with an embodiment of the present disclosure.

FIG. 10 shows an interpolation between prototypes of the Normal and Glaucoma classes learned by the system with a VGG16 encoder backbone and a latent dimension of 32, in accordance with an embodiment of the present disclosure.

FIG. 11 shows GradCAM maps for a Normal and a Glaucoma samples, in accordance with an embodiment of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Deep learning has revolutionized multiple research areas, with arduous tasks being accomplished in seconds. In the medical imaging community, it has emerged as a promising tool to tackle a multitude of problems. However, the adoption of deep learning-based solutions in clinical settings is slow to fruition, largely due to the black-box nature of these models. In recent years, several attempts have been made to address this issue, such as facilitating model explanation in the form of image attribution methods such as Grad-CAM and Integrated Gradients. However, these methods only provide a localization of the attributes sensitive to the classification models' decisions without shedding light on the models' reasoning processes. Moreover, such saliency-based posthoc visualization methods can oftentimes be misleading. A critical element lacking in these works that could largely benefit the medical imaging community is the intuitive explainability of sensitive 'concepts'. Such high-level features or concepts may be more intuitive to a medical practitioner than a mere localization of sensitive pixels. Recently, a concept attribution method, Gifsplanation, has been proposed in literature, which diminishes the sensitive features to generate new counterfactual images. A string of such counterfactual images is then stitched together into a short video to give a visual understanding of how the sensitive attributes change with changes in the model's predictions. While motivated in the right direction, Gifsplanation, as known in the art, being a posthoc explanation technique, lacks transparency, and the visualized concepts are not explicitly used in the classification task.

In the present disclosure, a prototype-based design is implemented to make black-box models inherently interpretable and inject the models with transparency. The method of the present disclosure provides a visualization of the actual prototypical images of the class, exemplifying the concepts used by the model, and employs the visualized prototypes in the classification task, making the model's reasoning process transparent. This approach aligns with the reasoning process used by domain experts of comparing cases at hand with known prototypical cases to reach conclusions. The system of the present disclosure is trained in an end-to-end regime without requiring the joint training of complex components like variational autoencoders, which hinder the training process and put a constraint on the input image resolutions. Additionally, the design can be utilized with any existing classification backbone. The present disclosure demonstrates the performance of the method of the present disclosure on MNIST and a real-world Glaucoma dataset. The method of the present disclosure has been evaluated by comparison with baseline methods and experimental results which show that it achieves comparable performance to its black-box counterparts, while also making the models interpretable. The method of the present disclosure also performs better than the state-of-the-art baseline in terms of both quantitative metrics as well as prototype visualizations. Moreover, the system is a prototype-based interpretable network that does not require training in conjunction with decoders. The present disclosure enables an end-to-end trainable approach to achieve both interpretability and diagnostic performance for Glaucoma detection using fundus images.

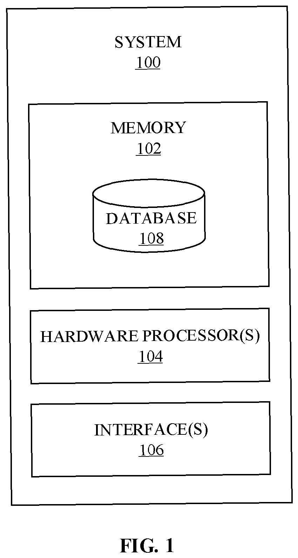

Referring now to the drawings, and more particularly to FIG. 1 through 11, where similar reference characters denote corresponding features consistently throughout the figures, there are shown preferred embodiments, and these embodiments are described in the context of the following exemplary system and/or method.

FIG. 1 depicts an exemplary system 100 for prototype-based task independent interpretable model, in accordance with an embodiment of the present disclosure. In an embodiment, the system 100 includes one or more hardware processors 104, communication interface device(s) or input/output (I/O) interface(s) 106 (also referred as interface(s)), and one or more data storage devices or memory 102 operatively coupled to the one or more hardware processors 104. The one or more processors 104 may be one or more software processing components and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is/are configured to fetch and execute computer-readable instructions stored in the memory. In an embodiment, the system 100 can be implemented in a variety of computing systems, such as laptop computers, notebooks, hand-held devices (e.g., smartphones, tablet phones, mobile communication devices, and the like), workstations, mainframe computers, servers, a network cloud, and the like.

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 102 may include any computer-readable medium known in the art including, for example, volatile memory, such as static random-access memory (SRAM) and dynamic-random access memory (DRAM), and/or non-volatile memory, such as read only memory (ROM), erasable programmable ROM, flash memories, hard disks, optical disks, and magnetic tapes. In an embodiment, a database 108 is comprised in the memory 102, wherein the database 108 comprises information pertaining to image dataset, labels, prototype vectors being obtained from training of the system 100, prototype images generated using the vectors, features extracted from the prototype images, and test image, similarity scores, output classes, and interpretation of training images and test images. The method 102 further comprises conditional generative model, classifier, and the like which when executed by the hardware processors 104 enable the system 100 to perform the method described herein. The memory 102 further comprises (or may further comprise) information pertaining to input(s)/output(s) of each step performed by the systems and methods of the present disclosure. In other words, input(s) fed at each step and output(s) generated at each step are comprised in the memory 102 and can be utilized in further processing and analysis.

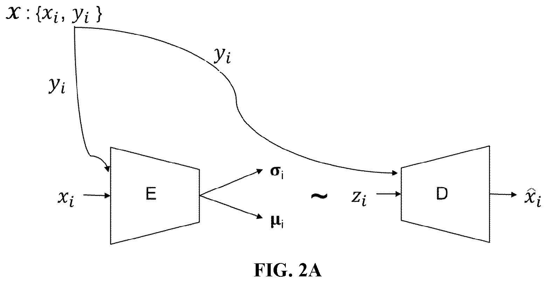

FIG. 2A, with reference to FIG. 1, depicts an exemplary high level block diagram of the system 100 illustrating training for a conditional generative model, in accordance with an embodiment of the present disclosure.

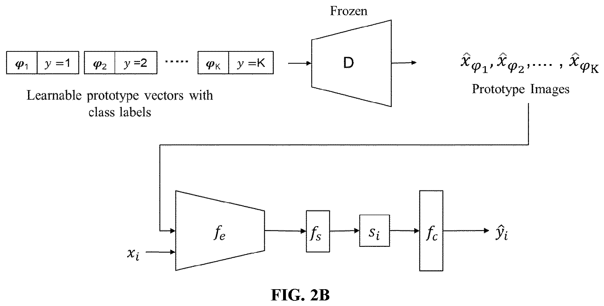

FIG. 2B, with reference to FIGS. 1 through 2B, depicts an exemplary high level block diagram of the system 100 that is trained for prototype-based task independent interpretable model, in accordance with an embodiment of the present disclosure.

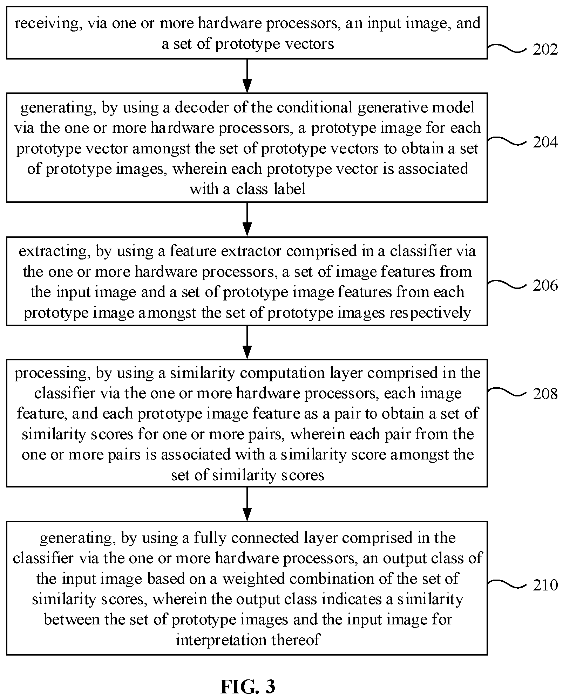

FIG. 3 depicts an exemplary flow chart illustrating a method for prototype-based task independent interpretable model, using the systems 100 of FIG. 1-2B, in accordance with an embodiment of the present disclosure. In an embodiment, the system(s) 100 comprises one or more data storage devices or the memory 102 operatively coupled to the one or more hardware processors 104 and is configured to store instructions for execution of steps of the method by the one or more processors 104. The steps of the method of the present disclosure will now be explained with reference to components of the system 100 of FIG. 1, the block diagram of the system 100 depicted in FIGS. 2A-2B, and the flow diagram as depicted in FIG. 3. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

At step 202 of the method of the present disclosure, the one or more hardware processors 104 receive an input image, and a set of prototype vectors. Each prototype vector is associated with a class label, in one example embodiment.

Given an image dataset with N data points, X: $(x_i, y_i)$ for i ∈ [1, ..., N], where for each pair $(x_i, y_i)$, $x_i \in \mathbb{R}^{H \times W \times C}$ is an image sample belonging to $K$ possible classes, and $y_i \in$ [1, ..., $K$] is the corresponding ground truth class label.

At step 204 of the method of the present disclosure, the one or more hardware processors 104 generate, by using a decoder of the conditional generative model, a prototype image for each prototype vector amongst the set of prototype vectors to obtain a set of prototype images. As mentioned above, each prototype vector is associated with a class label.

In an embodiment, the conditional generative model is trained by receiving, via an encoder of the conditional generative model, an image training dataset comprising a training image and an associated label. The training image is a first representation type. Given an image dataset with $N$ data points, X: $(x_i, y_i)$ for i ∈ [1, ..., N], where for each pair $(x_i, y_i)$,

$x_i \in \mathbb{R}^{H \times W \times C}$ is an image sample belonging to K possible classes, and $y_i \in$ [1, ..., $K$] is the corresponding ground truth class label.

Further, a set of vectors pertaining to a posterior distribution of the training image dataset are generated by the encoder of the conditional generative model based on the training image and the associated label. The set of vectors are then sampled based on the posterior distribution of the training image dataset to obtain a second representation type of the training image. The encoder, $\varepsilon$, generates the parameters, $\sigma$ and $\mu$, of the posterior distribution, instead of synthesizing a latent vector directly, i.e, $\{\sigma_i, \mu_i\} = \varepsilon(x_i, y_i)$. Then the reparameterization technique is used to sample the required latent vector, $z_i \sim \mathcal{N}(\sigma_i, \mu_i)$.

The decoder of the conditional generative model then processes the second representation type of the training image and the associated label to obtain a reconstructed image. In an embodiment, a perceptual reconstruction loss, a distribution distance loss, and a discriminator loss associated with the conditional generative model (e.g., say Conditional Variational Autoencoder (CVAE)) are combined based on one or more predefined weights to obtain a training loss. Hence, the Conditional Variational Autoencoder (CVAE) is trained by optimizing for $\mathcal{L}_{vae} = \mathcal{L}_{per} + \mathcal{L}_{disc} + \mathcal{L}_{KL}$, where $\mathcal{L}_{per}$ is the perceptual reconstruction loss, $\mathcal{L}_{disc}$ is the discriminator loss, and $\mathcal{L}_{KL}$ is the distribution distance loss (e.g., KL Divergence (KLD) loss). In an embodiment, one or more parameters of the conditional generative model are updated based on the training loss. It is to be understood by a person having ordinary skill in the art that such examples of CVAE implemented as the generative model as mentioned above shall not be construed as limiting the scope of the present disclosure. This conditional generative model $X$ and need not be retrained for changes in other components of the system 100 of FIGS. 1 and 2. The conditional generative model then uses the decoder of such the trained CVAE to achieve faithful reconstructions without further optimizing for the parameters of the decoder. In an embodiment, the domain of the image and the training image is identical. In other words, the image used in testing and training image used at the time of training the system are of the same domain (e.g., say medical imaging, and the like).

At step 206 of the method of the present disclosure, the one or more hardware processors 104 extract, by using a feature extractor comprised in a classifier, a set of image features from the input image and a set of prototype image features from each prototype image amongst the set of prototype images respectively. In an embodiment, the set of prototype vectors is obtained based on training of the feature extractor, the similarity computation layer, and the fully connected layer. In an embodiment, a dimension of the prototype image of each prototype vector amongst the set of prototype vectors and the input image is identical. The above step of 206 is better understood by way of following description:

The classifier also referred to as a classification module is composed of the feature extraction network, $f_e$, a similarity computation layer, $f_s$, and a fully connected layer, $f_c$. The feature extraction module, $f_e$, mimics the convolutional blocks prior to the fully connected layers in conventional classification networks. The system 100 can utilize any classification backbone and make existing classification models inherently explainable, in one example embodiment of the present disclosure. The feature extraction network or the feature extractor takes input images, $x_i$, to extract the features, $f_e(x_i)$, and the decoded prototype images, $\hat{x}_{\phi k}$, to extract the prototype image features $f_e(\hat{x}_{\phi k})$.

At step 208 of the method of the present disclosure, the one or more hardware processors 104 process, by using a similarity computation layer comprised in the classifier, each image feature from the set of image features, and each prototype image feature from the set of prototype image features as a pair to obtain a set of similarity scores for one or more pairs. Each pair from the one or more pairs is associated with a similarity score amongst the set of similarity scores. In an embodiment, the similarity score is calculated to determine an importance of each prototype vector amongst the set of prototype vectors for classification of the image. The above step of 208 is better understood by way of following description:

The system 100 includes the similarity computation layer, $f_s$, where the conventional inner product operator is replaced by generalized convolution (similarity measure). This similarity computation layer calculates the similarity of the input image features, $f_e(x_i)$, with every prototype image feature, $f_e(\hat{x}_{\phi_k})$, to obtain $K$ similarity scores. The similarity function used computes the $L_2$ distance between the pairs and inverts the distances to obtain similarity scores. For input image $x_i$, the similarity score $s_i \in \mathbb{R}^K$ is obtained as follows:

$$s_i = f_s(f_e(x_i), f_e(x_{\phi_k}))_{k=1}^K$$

$$= \log\left(\frac{\left\|f_e(x_i) - f_e(x_{\phi_k})\right\|^2 + 1}{\left\|f_e(x_i) - f_e(x_{\phi_k})\right\|^2 + \epsilon}\right)_{k=1}^K \qquad (1)$$

where, $0 < \varepsilon < 1$.

At step 210 of the method of the present disclosure, the one or more hardware processors 104 generate, by using a fully connected layer comprised in the classifier, an output class of the input image based on a weighted combination of the set of similarity scores. The output class indicates a similarity between the set of prototype images and the input image for interpretation thereof. The above step of 210 is better understood by way of following description:

The fully connected layer, $f_c$, takes the similarity scores as input and produces output logits (output class), convertible to probability scores of the input image belonging to each of the $K$ classes. Hence, the final predictions, $\hat{y}_i = f_c(s_i)$ where $\hat{y}_i \in \mathbb{R}^K$, are obtained from a weighted combination of the similarity scores of the input image features and each of the class prototype image features. This way the system 100 not only uses the learned prototypes in making the final decisions but also provides the similarity scores for an understanding of the importance of the different prototypes in the classification of a particular image.

Unlike conventional systems, the system 100 of the present disclosure does not require a conditional generative model (e.g., CVAE) to be tied to the training regime, simplifying the training procedure, and tackling the restriction on the use of higher-resolution inputs. Hence, the CVAE is trained separately and only once, not requiring retraining for every classification model. As described above, the conditional generative model (CVAE) is trained by optimizing for $\mathcal{L}_{vae} = \mathcal{L}_{per} + \mathcal{L}_{disc} + \mathcal{L}_{KL}$. The resulting generative decoder is extracted with frozen parameters to aid with image reconstruction. Once the frozen decoder is obtained, the overall objective function to optimize is given by equation (2) as mentioned below:

$$\mathcal{L}_{ce}\left(w_{f_e}, w_{f_c}, \phi\right) = \sum_{i=1}^N CE(y_i, \hat{y}_i) = \sum_{i=1}^N \sum_{k=1}^K CE\left(y_i, f_c, \left(f_s\left(f_e(x_i), f_e(x_{\phi k})\right)\right)\right) \qquad (2)$$

where, $CE$ is the cross-entropy loss function, $\mathcal{W}_{fe}$ and $\mathcal{W}_{fc}$ are the parameters of the feature extractor module, $f_e$, and the final fully connected layer, $f_c$, respectively, and $\Phi = \phi_1, \phi_2, \dots, \phi_K$ are the learnable prototype vectors. The minimization of $\mathcal{L}_{ce}$ penalizes misclassification of the training samples and hence encourages inter-class separation. This loss, in addition to the class conditioning of generative model (e.g., CVAE), ensures that each of the prototypes corresponds to a particular class. Further, the system 100 can be extended to have any number of prototypes per class to capture intra-class diversity. In the case of such multi-prototype networks, to avoid prototype collapse and encourage disentanglement of the learned prototypes per class, an orthonormal constraint is applied on the prototypes. This additional penalty can be formulated as mentioned below in equation (3):

$$\mathcal{L}_{orth} = \sum_{k=1}^K \|\bar{\varphi}_k^T \bar{\varphi}_k - I_M\|_F^2 \qquad (3)$$

where, $M$ is the number of prototypes per class, $\varphi_k = \{\phi_{k,1}, \phi_{k,2}, \dots, \phi_{k,M}\}$ is the set of prototype vectors corresponding to class $k$, and $\bar{\varphi}_k$ is a matrix whose column vectors are the differences between the prototypes corresponding to class k and their

mean, i.e.,

$$\bar{\varphi}_k = \left\{ \phi_{k,m} - \frac{1}{M} \sum_{m=1}^{M} \phi_{k,m} \right\} \ for \ m = 1, \ldots, M,$$

while $I_M \in \mathbb{R}^{M \times M}$ is an identity matrix, and $\|.\|_F$ is the Frobenius norm. Hence, the overall objective to be optimized is formulated as:

$$\mathcal{L} = \mathcal{L}_{ce} + \mathcal{L}_{orth}$$

Experiments

The system 100 has been initially evaluated on a toy dataset, MNIST (e.g., refer "Yann LeCun, L'eon Bottou, Yoshua Bengio, and Patrick Haffner. Gradient-based learning applied to document recognition. Proceedings of the IEEE, 86(11):2278-2324, 1998."). This is followed by an evaluation on a real-world dataset for Glaucoma.

Datasets

For Glaucoma, the system 100 and the method used the Rotterdam EyePACS AIROGS dataset (AIROGS) (e.g., refer "Coen de Vente, Koenraad A. Vermeer, Nicolas Jaccard, He Wang, Hongyi Sun, Firas Khader, Daniel Truhn, Temirgali Aimyshev, Yerkebulan Zhanibekuly, Tien-Dung Le, Adrian Galdran, Miguel A' ngel Gonza'lez Ballester, Gustavo Carneiro, R. G. Devika, Hrishikesh Panikkasseril Sethumadhavan, Densen Puthussery, Hong Liu, Zekang Yang, Satoshi Kondo, Satoshi Kasai, Edward Wang, Ashritha Durvasula, Jo'nathan Heras, Miguel A' ngel Zapata, Teresa Ara'ujo, Guilherme Aresta, Hrvoje Bogunovi'c, Mustafa Arikan, Yeong Chan Lee, Hyun Bin Cho, Yoon Ho Choi, Abdul Qayyum, Imran Razzak, Bram van Ginneken, Hans G. Lemij, and Clara I. S'anchez. Airogs: Artificial intelligence for robust glaucoma screening challenge. IEEE Transactions on Medical Imaging, 43(1):542-557, 2024.") as well as the Retinal IMage database for Optic Nerve Evaluation for Deep Learning (RIM-ONE DL) dataset (e.g., refer "Francisco Jos'e Fumero Batista, Tinguaro Diaz-Aleman, Jose Sigut, Silvia Alayon, Rafael Arnay, and Denisse Angel-Pereira. Rim-one dl: A unified retinal image database for assessing glaucoma using deep learning. Image Analysis and Stereology, 39(3):161-167, 2020."). The AIROGS dataset consists of 101,442 publicly available color fundus images. Each of the samples has been labeled as either Referable Glaucoma or Non-Referable Glaucoma. The original images are available as full fundus images, which are preprocessed to be cropped around the optic disk area as described in literature (e.g., refer "Ahmed Al-Mahrooqi, Dmitrii Medvedev, Rand Muhtaseb, and Mohammad Yaqub. Gardnet: Robust multi-view network for glaucoma classification in color fundus images. In InternationalWorkshop on Ophthalmic Medical Image Analysis, pages 152-161. Springer, 2022.") since these are the main regions of interest for Glaucoma detection. Despite the higher volume of this dataset compared to most other publicly available Glaucoma datasets, it is a highly imbalanced dataset with Referable Glaucoma making up a mere 3.2% of the total dataset. Additionally, the automated cropping adds noise to the dataset. Hence, AIROGS was used only in the pretraining stages of the conditional generative model training, giving the models a better initialization. Whereas for pre-training of the baselines and the system 100, the present disclosure created a subset of AIROGS, denoted AIROGSsub, in which the Referrable Glaucoma samples was oversamples by repetition, and the Non-Referrable Glaucoma samples were undersampled, only 27000 samples were kept (see Table 1 below).

Table 1

| Dataset | Glaucoma | No Glaucoma |
|---|---|---|
| AIROGS | 3270 | 98172 |
| AIROGS$_{sub}$ | 9508 | 27000 |
| RIM-ONE DL | 146 | 313 |

The RIM-ONE DL dataset was specially curated keeping in mind the deep learning paradigm and follows the specifications established in the REFUGE challenge (e.g., refer "Jos'e Ignacio Orlando, Huazhu Fu, Jõ ao Barbosa Breda, Karel Van Keer, Deepti R Bathula, Andr'es Diaz-Pinto, Ruogu Fang, Pheng-Ann Heng, Jeyoung Kim, JoonHo Lee, et al. Refuge challenge: A unified framework for evaluating automated methods for glaucoma assessment from fundus photographs. Medical image analysis, 59:101570, 2020."). It consisted of a total of 485 retinographies, of which 313 were from healthy individuals and 172 were from Glaucoma patients. The dataset is available in two variants, one partitioned into train and test sets by hospitals and the other partitioned randomly. In the present disclosure, random partition variant was used where the training set had 339 samples while the test set had 146 samples. Each of the samples was available cropped around the optic nerve head. The training set was used for finetuning of all models and final results were reported for the test set.

Baselines

For comparison, the system 100 and the method of the present disclosure choose four of the best-performing models reported in literature, including VGG16 (with Batch-Norm), VGG19 (with BatchNorm), ResNet50, and Mobile-Netv2. The models were retrained by the system 100 for fair comparison, maintaining the same training paradigm across all the baseline and proposed models. The system 100 pretrained all the baseline classification models using AIROGSsub for around 100 epochs and the weights were saved for the best configuration based on the validation loss. The models were then finetuned using the RIM-ONE DL dataset for around 300 epochs. For all these classification models, the medical domain images were resized to $224 \times 224$.

The publicly available implementation of ProtoVAE (e.g., refer "Srishti Gautam, Ahcene Boubekki, Stine Hansen, Suaiba Salahuddin, Robert Jenssen, Marina H¨ohne, and Michael Kampffmeyer. Protovae: A trustworthy self-explainable prototypical variational model. Advances in Neural Information Processing Systems, 35:17940-17952, 2022.") was used, with the same base architecture used for the CIFAR dataset (since this is the largest resolution dataset ($32 \times 32$)). Unlike the black-box classification models, ProtoVAE requires smaller resolution inputs, and hence the medical dataset images were resized to $64 \times 64$. Different versions of ProtoVAE were trained by varying the latent dimension to 16, 32, 64, 128, and 256. These models were also trained using the same paradigm followed by the rest of the models, i.e. pretraining using AIROGSsub and then finetuning using the RIM-ONE DL dataset. For all the baseline models, at the pretraining stage, no other data preprocessing was performed except data normalization to the [-1, 1] range. At the finetuning stage, since the dataset is small, data augmentation was applied using horizontal flip, vertical flip, random rotation (-30, 30), and random resized crop with scale (0.8, 1.2). For the classification loss, a weighted cross entropy was used to help with class imbalance in RIMONE DL. Further, all the models were trained using the Pytorch framework on an A100 GPU with 30GB RAM. Decoder $\mathcal{D}$ for the medical domain, the system 100 trained a VGG based CVAE. The image samples were resized to $64 \times 64$ for computational efficiency. No other preprocessing or augmentation was applied to the dataset apart from normalizing to the [-1, 1] range. The latent dimension of the models was varied as 16, 32, 64, or 128 across different experiments. Adam optimizer was used with a learning rate of 0.0001. To encourage realistic and sharper reconstructions the model was trained using Lvae, composed of a discriminator loss, a perceptual reconstruction loss, and the distribution distance loss (e.g., KLD loss), as described above. The coefficients for each component of the total loss were fixed as 1 across all experiments conducted by the present disclosure. The system 100 pretrained the models using AIROGS for around 200 epochs with a batch size of 32 and the best model was saved based on the validation loss. This was followed by the finetuning of the models using RIM-ONE DL, which makes the model learn the distribution of the RIM-ONE DL dataset. Similarly, for MNIST (Modified National Institute of Standards and Technology) dataset, the models were trained on the 28 $\times$ 28 input images. The conditional generative model (e.g., CVAE) was thus trained only once and the decoder was extracted. It need not be re-trained for every classification model, reducing the training overhead extensively.

System of the present disclosure: The trained decoder, D, is extracted and stitched into the proposed pipeline with its parameters frozen. The learnable prototype vectors are initialized from the normal distribution. For initial experiments, the number of prototypes is fixed to one per class. As described above, for the feature extractor, the convolutional layers of different existing classification networks have been used in the system. The classification networks used in the experiments of the present disclosure include VGG16, VGG19, ResNet50, and MobileNetv2, which were initialized with the weights of the trained baseline models, showcasing the ability of the system 100 to utilize any existing classification backbone. The system 100 also experimented with the encoder used in the ProtoVAE baselines. For experiments on the toy dataset, the classification networks used were variations of LeNet. Again, the present disclosure experimented with different versions of the model with varying prototype dimensions of 16, 32, 64 and 128. The models were pre-trained using AIROGSsub for about 200 epochs with a batch size of 32 for the medical datasets, and a batch size of 128 for MNIST. For finetuning, RIM-ONE DL was used with a batch size of 4. For the medical domain, the input images were resized to $224 \times 224$ and fed to the classifier, while the output of the frozen decoder was appropriately up-sampled for input to this module. The models were trained using the Adam optimizer and the learning rate was kept at 0.0001. The preprocessing and data augmentation performed are the same as those for the baseline models.

Evaluation

The system 100 evaluated the method of the present disclosure on the MNIST dataset. For this set of experiments, the number of prototypes chosen per class was one and the evaluation metric was accuracy. Table 2 shows the comparison with black-box models in terms of Accuracy.

Table 2

| MODEL | TEST ACCURACY (%) |
|---|---|
| LeNet | 99.51 |
| System and method (LeNet-64) of the present disclosure | 99.17 |

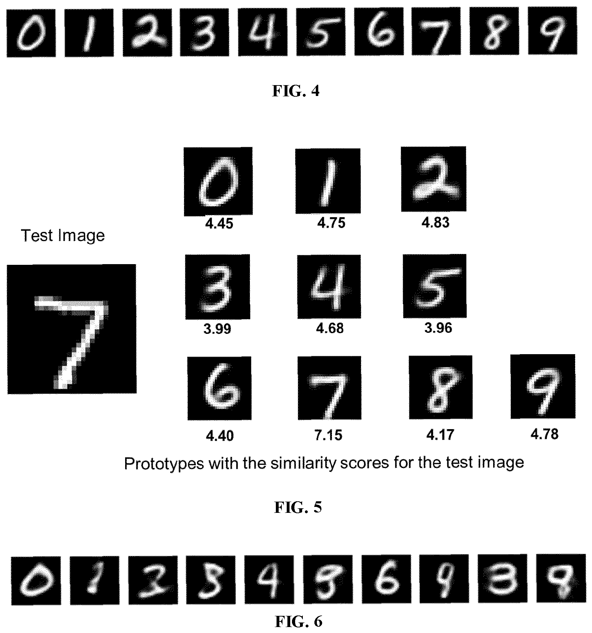

FIG. 4, with reference to FIGS. 1 through 3, shows the prototypes learned for each class, in accordance with an embodiment of the present disclosure. These can be compared with the prototypes of a model trained using the decoder of a conditional generative model (e.g., CVAE) without any class conditioning constraint. As shown in FIG. 6, without the class conditioning constraint, the cross-entropy loss alone is not enough to enforce the interclass diversity of the prototypes and the correspondence of each prototype to a specific class. More specifically, FIG. 6, with reference to FIGS. 1 through 5, depicts prototypes learned by a version of the method which uses the decoder of a generative model without any class conditioning, in accordance with an embodiment of the present disclosure. A test accuracy of 99.13% was obtained. There seems to be an entangling of the prototypes of classes 2 and 3, classes 7 and 9, and classes 3, 5 and 8. Hence, the class conditioning obtained by using the conditional generative model (e.g., CVAE) helps ensure that the learned prototypes correspond to a particular class. FIG. 5, with reference to FIGS. 1 through 4, shows similarity scores obtained for a correctly classified test sample, in accordance with an embodiment of the present disclosure. These scores show that the model uses the correct prototype for classification. This can be confirmed by visually looking at the prototype, which indeed looks like a prototypical '7'. Additionally, it is assured by the system 100 and the method of the present disclosure that the prototype was also sampled from the distribution of class '7' due to the class conditioning constraint which further strengthens the confidence on the model's predictions.

Next, the system 100 reports results for the Glaucoma dataset. Table 3 presents the results of the models for classification of Glaucoma on the RIM-ONE DL test set.

Table 3

| Model | Accuracy (%) | AUC (Area Under the Curve) | Sensitivity |
|---|---|---|---|
| VGG16 | 95.9 | 95.9 | 92.3 |
| VGG19 | 95.2 | 94.6 | 94.2 |
| Resnet50 | 95.2 | 95 | 92.3 |
| MobileNetV2 | 94.5 | 94.4 | 90.4 |
| ProtoVAE-16 | 92.47 | 90.7 | 84.6 |
| ProtoVAE-32 | 91.1 | 91.4 | 92.3 |
| ProtoVAE-64 | 92.47 | 91.6 | 88.5 |
| ProtoVAE-128 | 93.15 | 93 | 92.3 |
| ProtoVAE-256 | 91.78 | 91 | 88.5 |
| Method of the present disclosure (VGG16-64) | 95.21 | 95.85 | 98.08 |
| Method of the present disclosure (VGG19-64) | 94.52 | 94.89 | 96.15 |
| Method of the present disclosure (Resnet50-64) | 93.15 | 94.68 | 100 |
| Method of the present disclosure (MobileNetv2-64) | 95.21 | 94.56 | 92.31 |
| Method of the present disclosure (ProtoVAE-16) | 92.47 | 91.57 | 88.46 |
| Method of the present disclosure (ProtoVAE-32) | 93.15 | 92.96 | 92.31 |
| Method of the present disclosure (ProtoVAE-64) | 93.15 | 94.25 | 98.08 |
| Method of the present disclosure (ProtoVAE-128) | 94.52 | 94.46 | 94.23 |

The metrics used for comparison are Accuracy, AUC (Area Under the Receiver Operating Characteristic Curve), and Sensitivity. For the model of the present disclosure, the system 100 experimented across four latent dimensions, 16, 32, 64, 128, and across different classification backbones including VGG16, VGG19, ResNet50, MobileNetV2, and the encoder backbone used for the Proto-VAE baselines. Accordingly, the different versions of the model were named as method of the present disclosure (classification backbone-latent dimension). Similarly, ProtoVAE results were generated for different versions of the model using five different latent dimensions of 16, 32, 64, 128, 256. These are named accordingly as ProtoVAE-latent dimension. As shown in the Table 3, the method of the present disclosure achieves comparable performance to their black-box counterparts in terms of all three metrics. The method of the present disclosure achieves a better sensitivity than all the black-box classification backbones. Again, the quantitative comparison with corresponding versions of ProtoVAE shows the superior performance of the proposed models, especially in terms of the AUC and sensitivity metrics. It should be noted that while the results for all the models are reported for an input size of 224×224, the ProtoVAE model results are for an input size of 64 × 64.

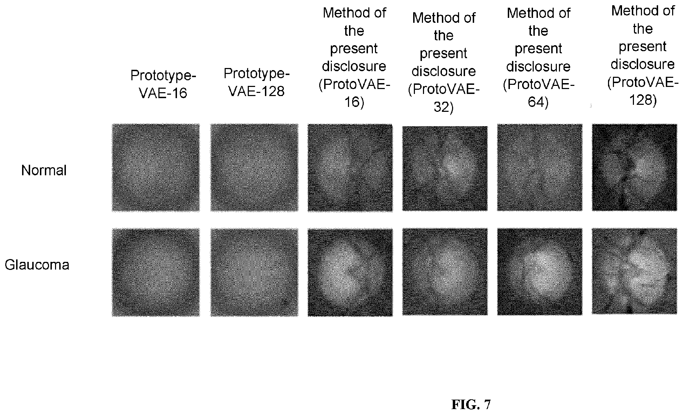

Qualitative comparison in terms of the global explanations provided by the prototype images is shown in FIG. 7 for different latent dimensions. More specifically, FIG. 7, with reference to FIGS. 1 through 6, depicts visual comparison of prototypes learnt by ProtoVAE of conventional method and the method of the present disclosure using the same classification backbone, in accordance with an embodiment of the present disclosure. Across all five latent dimensions, ProtoVAE is unable to produce meaningful prototypes due to the need to optimize for both the VAE losses and the classification losses. Since all the ProtoVAE models' prototypes are extremely blurry, the prototypes for two models, having latent dimensions 16 and 128 are shown for the sake of brevity. Whereas the method of the present disclosure, using the same encoder backbones as ProtoVAE, learn meaningful prototype images as shown in FIG. 7. Both the CVAE in the method of the present disclosure and the VAE in ProtoVAE (conventional method) were trained using 64 × 64 sized inputs, however, the additional perceptual and discriminator losses help the conditional generative model (CVAE) mitigate the blurring issue faced by ProtoVAE (conventional method). Since the training regime was kept almost identical for both ProtoVAE and the method of the present disclosure, model capacities are kept similar, and a fair chance is given to ProtoVAE with smaller input dimensions, these results show how it is easier to train the system 100 compared to ProtoVAE (conventional systems). For good sample generation using a VAE, a balance needs to be attained between the reconstruction loss and the distribution distance loss (e.g., KL Divergence loss). Adding a classification loss into the mix and the complexity of real-world datasets complicates the training procedure significantly. Overall, the prototypes of the method of the present disclosure shown in FIG. 7 exhibit an enlarged optic cup for the Glaucoma samples compared to the Normal samples, which is one of the primary factors motivating Glaucoma detection as previously known in the art. However, the prototypes of method of the present disclosure (ProtoVAE-128) show some visual artifacts around the retinal vessels despite having better quantitative performance, which should help experts qualify whether the classification backbone used is acceptable or needs to be discarded.

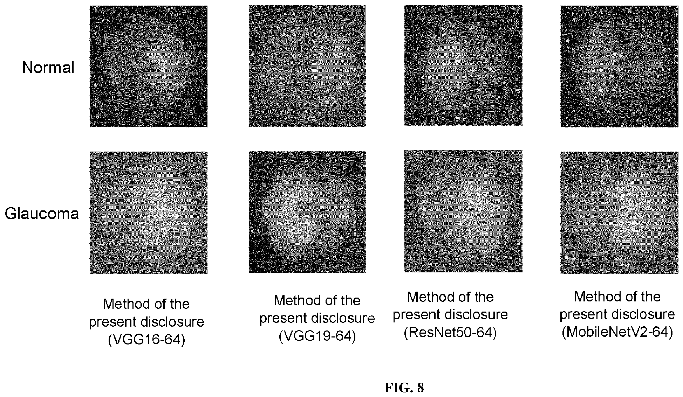

Further, a visual comparison of the prototypes learned by different classification backbones is shown in FIG. 8. More specifically, FIG. 8, with reference to FIGS. 1 through 7, depicts a visual comparison of prototypes learned by the system 100 for different classification backbones and latent dimension 64, in accordance with an embodiment of the present disclosure. For brevity, the results have been shown only for a latent dimension of 64 across all the backbones. Again, the prototypes for Glaucoma exhibit an enlarged optic cup area compared to the prototypes learned for the Normal class. Additionally, the retinal vessels can be noted as having a higher curvature in the prototypes of Glaucoma compared to those of Normal, indicating a focus on retinal vessel concepts as well.

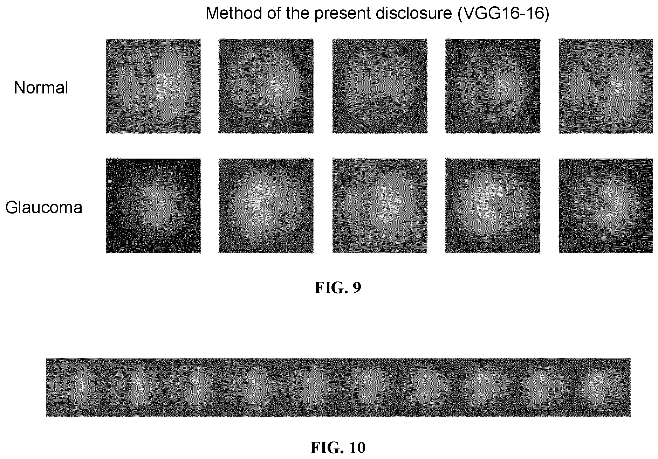

Though most of the Glaucoma detection literature using deep learning focuses on the cup-to-disc (C/D) ratio for Glaucoma detection, there are many other factors that experts use for clinical diagnoses, such as the presence of disc hemorrhage, thinning of the neuroretinal rim and rim that does not obey the ISNT rule as known in the literature, bayoneting or the disappearance of vessels near the optic cup as they bend with a sharp turn and the vanishing of the nerve fiber layer. Considering that diagnosing Glaucoma is a complex process and requires examining multiple concepts, it justifies the need for more than one prototype per class to capture the diverse concepts. FIG. 9, with reference to FIGS. 1 through 8, depicts multiple prototypes per class learned by the system 100 for a VGG16 classification backbone with latent dimension 16, in accordance with an embodiment of the present disclosure. The number of prototypes per class is 5. The models were trained to learn 5 prototypes per class. While the observation of a bigger optic cup remains consistent across the Glaucoma prototypes, there is also some variety captured in terms of color and brightness. The vessels were observed to have a higher curvature in the Glaucoma prototypes compared to the normal ones. While multiple prototypes per class can give a better idea of the concepts being focused on, since there is no explicit effort in the architecture design to ground the various concepts, the models may not be motivated to look at the subtle signs. Hence, this motivates the need to design models that explicitly capture the concepts used by domain experts, and with such models, the system 100 can be used to further confirm if the targeted concepts are actually being used and if so, quantify the amount of contribution of each such concept.

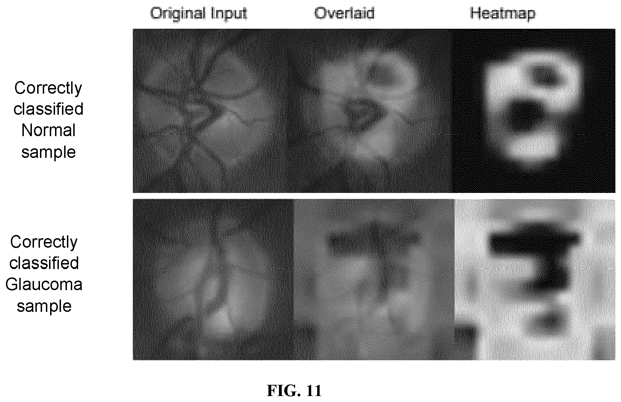

FIG. 10, with reference to FIGS. 1 through 9, shows an interpolation between prototypes of the Normal and Glaucoma classes learned by the system 100 with a VGG16 encoder backbone and a latent dimension of 32, in accordance with an embodiment of the present disclosure. The smooth transition discloses the model's transparent latent space. The latent movement from Normal to Glaucoma shows the thinning of vessels and gradual enlargement of the optic cup, also known as cupping. Traditional attribution methods were used, including Grad-CAM and Integrated Gradients as known in the art, for the black-box classification models trained on the RIM-ONE DL dataset. The resulting maps for the Normal class have been consistent and showed that the models are sensitive to pixels at two regions in the fundus image, around the superior and inferior rim areas. Whereas for the Glaucoma class, the maps were not consistent across the images, while some show sensitivity around the optic disk, some have sensitive pixels all over the input image, while for a few images, it is sensitive to regions outside of the optic disc as well. These sensitive pixel attribution maps do not help to conclude anything substantial about the model's reasoning process. FIG. 11, with reference to FIGS. 1 through 10, shows GradCAM maps for a Normal and a Glaucoma samples, in accordance with an embodiment of the present disclosure. The system 100 also trained the conventional Gifsplanation system for retinal images and the resulting gifs indicate that the classification models rapidly change the predictions for subtle visual changes in the counterfactual images. However, since these counterfactual images were not actually used in training the models, they may not be loyal to the model's reasoning process. Additionally, the above conventional method is limited by the latent representation learned by the autoencoder. Even if the autoencoder learns to reconstruct the input images, which it does for the retinal images, there is no guarantee that it learns to express the features being used by the classifier and hence the visualized concepts may not be trusted.

Embodiments of the present disclosure provide systems and methods that implement a prototype-based interpretable model, wherein the performance of the system 100 and the method has been demonstrated for Glaucoma detection. The learned prototypes exhibit cupping in the Glaucoma samples, which complements the hypothesis followed by most of the literature for automated Glaucoma detection using deep learning approaches. This provides a more intuitive explanation to the medical practitioner in comparison to posthoc explanations provided by traditional attribution methods. There is scope to use rich features like annotations of the optic disc and cup, retinal vessels, and other retinal landmarks to explicitly ground these concepts into the network's learning. Then the system 100 and the method can be utilized to examine if the model focuses on the correct diagnostic concepts. Automated medical diagnosis is a complex problem, requiring analysis of multiple concepts and at varied scales. The system 100 and the method of the present disclosure can be extended to focus on such multi-scale features. It is to be understood by a person having ordinary skill in the art that the examples of glaucoma detection from the input image with reference to prototype image(s) shall not be construed as limiting the scope of the present disclosure. In other words, the system 100 of FIGS. 1 through 2B, and the flow diagram of FIG. 3 can be applied to any classification, prediction, interpretation tasks, various domains, and/or applications, based on the output class, and the similarity score between input image and reference prototype images. For instance, the system 100 and the method of the present disclosure can also be implemented in manufacturing/production industries and/or assembly lines or shop floors wherein test image under consideration can be checked for similarity with reference prototype image in shop floor for detection/inspection of wear and tear associated with components or various parts depicted in the image(s) (e.g., interpretation of test image (or input image) (or detection of one or more associated parameters from the test image) based on the output class and/or similarity score, thus allowing the system 100 and method of the present disclosure to serve as a prototype-based task independent interpretation model.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an applicationspecific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computerusable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method comprising:

   receiving, via one or more hardware processors, an input image, and a set of prototype vectors (202);
   generating, by using a decoder of the conditional generative model via the one or more hardware processors, a prototype image for each prototype vector amongst the set of prototype vectors to obtain a set of prototype images (204), wherein each prototype vector is associated with a class label;
   extracting, by using a feature extractor comprised in a classifier via the one or more hardware processors, a set of image features from the input image and a set of prototype image features from each prototype image amongst the set of prototype images respectively (206);
   processing, by using a similarity computation layer comprised in the classifier via the one or more hardware processors, each image feature, and each prototype image feature as a pair to obtain a set of similarity scores for one or more pairs (208), wherein each pair from the one or more pairs is associated with a similarity score amongst the set of similarity scores; and
   generating, by using a fully connected layer comprised in the classifier via the one or more hardware processors, an output class of the input image based on a weighted combination of the set of similarity scores (210), wherein the output class indicates a similarity between the set of prototype images and the input image for interpretation thereof.

2. The processor implemented method as claimed in claim 1, wherein the conditional generative model is trained by

   receiving, via an encoder of the conditional generative model, an image training dataset further comprising a training image and an associated label, wherein the training image is a first representation type;
   generating, via the encoder of the conditional generative model, a set of vectors pertaining to a posterior distribution of the training image dataset based on the training image and the associated label;
   sampling the set of vectors based on the posterior distribution of the training image dataset to obtain a second representation type of the training image; and
   processing, via the decoder of the conditional generative model, the second representation type of the training image and the associated label to obtain a reconstructed image.

3. The processor implemented method as claimed in claim 1, wherein a perceptual reconstruction loss, a distribution distance loss, and a discriminator loss associated with the conditional generative model are combined based on one or more predefined weights to obtain a training loss.

4. The processor implemented method as claimed in claim 3, wherein one or more parameters of the conditional generative model are updated based on the training loss.

5. The processor implemented method as claimed in claim 1, wherein the set of prototype vectors is obtained based on training of the feature extractor, the similarity computation layer, and the fully connected layer.

6. The processor implemented method as claimed in claim 2, wherein a dimension of the prototype image of each prototype vector amongst the set of prototype vectors and the input image is identical, and wherein a domain of the image and the training image is identical.

7. The processor implemented method as claimed in claim 1, wherein the similarity score is calculated to determine an importance of each prototype vector amongst the set of prototype vectors for classification of the image.

8. A system (100), comprising:

   a memory (102) storing instructions;
   one or more communication interfaces (106); and
   one or more hardware processors (104) coupled to the memory (102) via the one or more communication interfaces (106), wherein the one or more hardware processors (104) are configured by the instructions to:

      receive an input image, and a set of prototype vectors;
      generate, by using a decoder of the conditional generative model, a prototype image for each prototype vector amongst the set of prototype vectors to obtain a set of prototype images, wherein each prototype vector is associated with a class label;
      extract, by using a feature extractor comprised in a classifier, a set of image features from the input image and a set of prototype image features from each prototype image amongst the set of prototype images respectively;
      process, by using a similarity computation layer comprised in the classifier, each image feature, and each prototype image feature as a pair to obtain a set of similarity scores for one or more pairs, wherein each pair from the one or more pairs is associated with a similarity score amongst the set of similarity scores; and
      generate, by using a fully connected layer comprised in the classifier, an output class of the input image based on a weighted combination of the set of similarity scores (210), wherein the output class indicates a similarity between the set of prototype images and the input image for interpretation thereof.

9. The system as claimed in claim 8, wherein the conditional generative model is trained by

   receiving, via an encoder of the conditional generative model, an image training dataset further comprising a training image and an associated label, wherein the training image is a first representation type;
   generating, via the encoder of the conditional generative model, a set of vectors pertaining to a posterior distribution of the training image dataset based on the training image and the associated label;
   sampling the set of vectors based on the posterior distribution of the training image dataset to obtain a second representation type of the training image; and
   processing, via the decoder of the conditional generative model, the second representation type of the training image and the associated label to obtain a reconstructed image.

10. The system as claimed in claim 9, wherein a perceptual reconstruction loss, a distribution distance loss, and a discriminator loss associated with the conditional generative model are combined based on one or more predefined weights to obtain a training loss.

11. The system as claimed in claim 10, wherein one or more parameters of the conditional generative model are updated based on the training loss.

12. The system as claimed in claim 8, wherein the set of prototype vectors is obtained based on training of the feature extractor, the similarity computation layer, and the fully connected layer.

13. The system as claimed in claim 9, wherein a dimension of the prototype image of each prototype vector amongst the set of prototype vectors and the input image is identical, and wherein a domain of the image and the training image is identical.

14. The system as claimed in claim 8, wherein the similarity score is calculated to determine an importance of each prototype vector amongst the set of prototype vectors for classification of the image.

**15.** One or more non-transitory machine-readable information storage mediums comprising one or more instructions which when executed by one or more hardware processors cause:

receiving an input image, and a set of prototype vectors;

generating, by using a decoder of the conditional generative model, a prototype image for each prototype vector amongst the set of prototype vectors to obtain a set of prototype images, wherein each prototype vector is associated with a class label;

extracting, by using a feature extractor comprised in a classifier, a set of image features from the input image and a set of prototype image features from each prototype image amongst the set of prototype images respectively;

processing, by using a similarity computation layer comprised in the classifier, each image feature, and each prototype image feature as a pair to obtain a set of similarity scores for one or more pairs, wherein each pair from the one or more pairs is associated with a similarity score amongst the set of similarity scores; and

generating, by using a fully connected layer comprised in the classifier, an output class of the input image based on a weighted combination of the set of similarity scores, wherein the output class indicates a similarity between the set of prototype images and the input image for interpretation thereof.

SYSTEM
100

MEMORY
102

DATABASE
108

HARDWARE PROCESSOR(S)
104

INTERFACE(S)
106

**FIG. 1**

**FIG. 2A**

**FIG. 2B**

```
┌────────────────────────────────────────────────────────────────┐
│  receiving, via one or more hardware processors, an input       │
│  image, and a set of prototype vectors                          │ ~ 202
└────────────────────────────────────────────────────────────────┘
                              │
                              ▼
┌────────────────────────────────────────────────────────────────┐
│  generating, by using a decoder of the conditional generative   │
│  model via the one or more hardware processors, a prototype     │
│  image for each prototype vector amongst the set of prototype   │ ~ 204
│  vectors to obtain a set of prototype images, wherein each      │
│  prototype vector is associated with a class label              │
└────────────────────────────────────────────────────────────────┘
                              │
                              ▼
┌────────────────────────────────────────────────────────────────┐
│  extracting, by using a feature extractor comprised in a        │
│  classifier via the one or more hardware processors, a set of   │
│  image features from the input image and a set of prototype     │ ~ 206
│  image features from each prototype image amongst the set of    │
│  prototype images respectively                                  │
└────────────────────────────────────────────────────────────────┘
                              │
                              ▼
┌────────────────────────────────────────────────────────────────┐
│  processing, by using a similarity computation layer comprised  │
│  in the classifier via the one or more hardware processors,     │
│  each image feature, and each prototype image feature as a      │
│  pair to obtain a set of similarity scores for one or more      │ ~ 208
│  pairs, wherein each pair from the one or more pairs is         │
│  associated with a similarity score amongst the set of          │
│  similarity scores                                              │
└────────────────────────────────────────────────────────────────┘
                              │
                              ▼
┌────────────────────────────────────────────────────────────────┐
│  generating, by using a fully connected layer comprised in the  │
│  classifier via the one or more hardware processors, an output  │
│  class of the input image based on a weighted combination of    │
│  the set of similarity scores, wherein the output class         │ ~ 210
│  indicates a similarity between the set of prototype images     │
│  and the input image for interpretation thereof                 │
└────────────────────────────────────────────────────────────────┘
```

**FIG. 3**

**FIG. 4**

Test Image

| 4.45 | 4.75 | 4.83 |
| 3.99 | 4.68 | 3.96 |
| 4.40 | 7.15 | 4.17 | 4.78 |

Prototypes with the similarity scores for the test image

**FIG. 5**

**FIG. 6**

|  | Prototype-VAE-16 | Prototype-VAE-128 | Method of the present disclosure (ProtoVAE-16) | Method of the present disclosure (ProtoVAE-32) | Method of the present disclosure (ProtoVAE-64) | Method of the present disclosure (ProtoVAE-128) |
|---|---|---|---|---|---|---|
| Normal | | | | | | |
| Glaucoma | | | | | | |

**FIG. 7**

Normal

Glaucoma

Method of the
present disclosure
(VGG16-64)

Method of the
present disclosure
(VGG19-64)

Method of the
present disclosure
(ResNet50-64)

Method of the
present disclosure
(MobileNetV2-64)

FIG. 8

Method of the present disclosure (VGG16-16)

Normal

Glaucoma

**FIG. 9**

**FIG. 10**

FIG. 11

| | Europäisches Patentamt<br>European Patent Office<br>Office européen des brevets | **EUROPEAN SEARCH REPORT** | **Application Number**<br>EP 25 17 5963 |
| --- | --- | --- | --- |

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| X | SRISHTI GAUTAM ET AL: "ProtoVAE: A Trustworthy Self-Explainable Prototypical Variational Model",<br>ARXIV.ORG, CORNELL UNIVERSITY LIBRARY, 201 OLIN LIBRARY CORNELL UNIVERSITY ITHACA, NY 14853,<br>15 October 2022 (2022-10-15), XP091344902,<br>* abstract *<br>* sections 4.1 - 4.3 *<br>* figure 2 *<br>* table 1 *<br>* equations (1) and (2) *<br>----- | 1-15 | INV.<br>G06V10/44<br>G06V10/764<br>G06V10/82<br>G06V40/18 |
| X | FERRANTE MATTEO ET AL: "VAESim: A probabilistic approach for self-supervised prototype discovery",<br>IMAGE AND VISION COMPUTING,<br>vol. 137, 1 September 2023 (2023-09-01),<br>page 104746, XP093248561,<br>GUILDFORD, GB<br>ISSN: 0262-8856, DOI:<br>10.1016/j.imavis.2023.104746 | 1,8,15 | |
| A | * abstract *<br>* sections 3, 3.1 - 3.3 *<br>* sections 5.1, 5.2 *<br>----- | 2-7,9-14 | **TECHNICAL FIELDS SEARCHED (IPC)**<br>G06V |

-/--

The present search report has been drawn up for all claims

| Place of search | Date of completion of the search | Examiner |
| --- | --- | --- |
| The Hague | 6 October 2025 | Peelen, Bastien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

  .......................................................................................

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

**Application Number**

EP 25 17 5963

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | AZZAM MOHAMED ET AL: "KTransGAN: Variational Inference-Based Knowledge Transfer for Unsupervised Conditional Generative Learning", IEEE TRANSACTIONS ON MULTIMEDIA, IEEE, USA, vol. 23, 14 September 2020 (2020-09-14), pages 3318-3331, XP011879709, ISSN: 1520-9210, DOI: 10.1109/TMM.2020.3023792 [retrieved on 2021-09-23] * abstract * * section III.B * * figure 2 * | 3,10 | |
| | ----- | | |
| | | | **TECHNICAL FIELDS SEARCHED (IPC)** |

The present search report has been drawn up for all claims

| Place of search | Date of completion of the search | Examiner |
|---|---|---|
| The Hague | 6 October 2025 | Peelen, Bastien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................
& : member of the same patent family, corresponding document

EPO FORM 1503 03.82 (P04C01)

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• IN 202421039029

**Non-patent literature cited in the description**

• **YANN LECUN ; L'EON BOTTOU ; YOSHUA BENGIO ; PATRICK HAFFNER**. Gradient-based learning applied to document recognition.. *Proceedings of the IEEE*, 1998, vol. 86 (11), 2278-2324
• **COEN DE VENTE ; KOENRAAD A. VERMEER ; NICOLAS JACCARD ; HE WANG ; HONGYI SUN ; FIRAS KHADER ; DANIEL TRUHN ; TEMIRGALI AIMYSHEV ; YERKEBULAN ZHANIBEKULY ; TIEN-DUNG LE**. Airogs: Artificial intelligence for robust glaucoma screening challenge. *IEEE Transactions on Medical Imaging*, 2024, vol. 43 (1), 542-557
• **FRANCISCO JOS'E ; FUMERO BATISTA ; TINGUARO DIAZ-ALEMAN ; JOSE SIGUT ; SILVIA ALAYON ; RAFAEL ARNAY ; DENISSE ANGEL-PEREIRA**. Rim-one dl: A unified retinal image database for assessing glaucoma using deep learning.. *Image Analysis and Stereology*, 2020, vol. 39 (3), 161-167

• Gardnet: Robust multi-view network for glaucoma classification in color fundus images.. **AHMED AL-MAHROOQI ; DMITRII MEDVEDEV ; RAND MUHTASEB ; MOHAMMAD YAQUB**. In International-Workshop on Ophthalmic Medical Image Analysis. Springer, 2022, 152-161
• **JOS'E IGNACIO ORLANDO ; HUAZHU FU ; JÕ AO BARBOSA BREDA ; KAREL VAN KEER ; DEEPTI R BATHULA ; ANDR'ES DIAZ-PINTO ; RUOGU FANG ; PHENG-ANN HENG ; JEYOUNG KIM ; JOONHO LEE et al.** Refuge challenge: A unified framework for evaluating automated methods for glaucoma assessment from fundus photographs.. *Medical image analysis*, 2020, vol. 59, 101570
• **SRISHTI GAUTAM ; AHCENE BOUBEKKI ; STINE HANSEN ; SUAIBA SALAHUDDIN ; ROBERT JENSSEN ; MARINA H¨OHNE ; MICHAEL KAMPFFMEYER**. Protovae: A trustworthy self-explainable prototypical variational model.. *Advances in Neural Information Processing Systems*, 2022, vol. 35, 17940-17952